# EUROPÄISCHE PATENTSCHRIFT

(11) **EP 3 328 783 B1**
(45) Veröffentlichungstag und Bekanntmachung des Hinweises auf die Patenterteilung: **25.03.2020**
(21) Anmeldenummer: 16744787.9
(22) Anmeldetag: 29.07.2016
(51) Int. Cl.: B66D 1/74, B66D 1/38, B64D 1/22

(54) **SEILWINDE UND SEILTROMMEL**
CABLE WINCH AND CABLE DRUM
TREUIL ET TAMBOUR DE TREUIL

(30) Priorität: 30.07.2015 DE 102015009700
(43) Veröffentlichungstag der Anmeldung: 06.06.2018
(73) Patentinhaber: JENOPTIK Advanced Systems GmbH, 22880 Wedel (DE)
(72) Erfinder: FRIEDERICHS, Ralf, 22455 Hamburg (DE); SCHMIDT, Joachim, 25436 Tornesch (DE); THRON, Kai, 25421 Pinneberg (DE)
(74) Vertreter: Waldauf, Alexander
(86) Internationale Anmeldenummer: PCT/EP2016/068148
(87) Internationale Veröffentlichungsnummer: WO 2017/017250

(56) Entgegenhaltungen:
- WO-A2-2006/015267
- CH-A- 134 446
- DE-C- 709 934
- US-A- 1 396 721
- US-A1- 2010 051 890

## Beschreibung

### Stand der Technik

Die vorliegende Erfindung bezieht sich auf eine Seilwinde und eine Seiltrommel.

Für eine volle Funktionalität einer Seilwinde, die beispielsweise als Rettungswinde in einem Rettungshubschrauber zum Einsatz kommt, muss das Seil der Seilwinde ausgewechselt werden können. Dazu wird das Seil von einer mit der Winde fest verbundenen Seiltrommel abgewickelt. Ein Hilfsseil wird am Seilende befestigt und durch das Seilführungssystem gezogen. Dasselbe geschieht - bei Einsatz einer Seilwinde gemäß dem Capstan-System - nach Auswechseln des Hilfsseils vom Haken aus zur Trommel. Das trommelseitige Seilende wird dabei mittels eines Klemmelements mit der Trommel verbunden. Bei Direktwicklern ist die Vorgehensweise ähnlich.

Die US 2010/051890 A1 offenbart eine Seilwinde mit einer Aufnahmeeinheit zum Aufnehmen einer Seiltrommel mit einem auf einer Achse der Seiltrommel aufgewickelten Seil und eine Treibeinheit mit zumindest einer Treibscheibe, wobei die Treibeinheit in einer Aufwickelrichtung des Seils auf die Seiltrommel der Aufnahmeeinheit vorgelagert ist und ausgebildet ist, um zumindest einen Anteil einer Zugkraft zum Anheben einer Last mittels des Seils bereitzustellen, und wobei die Treibeinheit ausgebildet ist, um ein freies Seilende des Seils von der Seiltrommel aufzunehmen und das Seil zu führen.

### Offenbarung der Erfindung

Vor diesem Hintergrund werden mit der vorliegenden Erfindung eine Seilwinde gemäß dem unabhängigen Anspruch 1 vorgestellt. Vorteilhafte Ausgestaltungen ergeben sich aus den jeweiligen Unteransprüchen und der nachfolgenden Beschreibung.

Eine Seilwinde, die mit einer Aufnahmeeinheit zum Aufnehmen einer mit einem Seil bestückten Seiltrommel gestaltet ist, die eine Schnellmontagevorrichtung zum manuell lösbaren Befestigen der Seiltrommel an der Seilwinde aufweist, erlaubt die Realisierung eines beschleunigten Seilwechsels, indem eine Seiltrommel komplett mit dem aufgespulten Seil entnommen und durch eine neue Seiltrommel mit aufgespultem Seil ersetzt werden kann.

Die Ver- und Entriegelung der Seiltrommel mittels der Schnellmontagevorrichtung bietet den Vorteil, dass für den Trommeltausch keine Werkzeuge erforderlich sind. So können Zeit und Kosten gespart werden. Weiterhin kann die Komplexität der Trommel so weit eingeschränkt werden, dass Einstellarbeiten überflüssig sind.

Gemäß dem hier vorgestellten Konzept kann das Abwickeln des kompletten Seils von der Seiltrommel und/oder das Aufspulen eines neuen Seils entfallen. Der Zeitaufwand eines notwendigen Seilwechsels - beispielsweise an einer Rettungswinde an einem Hubschrauber -kann damit erheblich verringert werden. Mit dem schnelleren und weniger komplexen Arbeitsablauf beim Seilwechsel können Wartungsaufwand und somit Kosten gespart werden, die Verfügbarkeit der Winde kann erhöht werden und der Hubschrauber nach erfolgtem Seilwechsel schneller wieder zum Einsatz zur Verfügung stehen.

Ein Seilwechsel einer gemäß dem hier vorgestellten Konzept aufgebauten Seilwinde ist zudem ohne große Vorkenntnisse durchführbar. Eine kurze Einweisung des Bedienpersonals kann ausreichend sein.

Gemäß der Erfindung, weist eine Seilwinde die folgenden Merkmale auf: eine Aufnahmeeinheit zum Aufnehmen einer Seiltrommel mit einem auf einer Achse der Seiltrommel aufgewickelten Seil, wobei die Aufnahmeeinheit eine Schnellmontagevorrichtung zum manuellen lösbaren Befestigen der Seiltrommel an der Seilwinde aufweist; und eine Treibeinheit mit zumindest einer Treibscheibe, wobei die Treibeinheit in einer Aufwickelrichtung des Seils auf die Seiltrommel der Aufnahmeeinheit vorgelagert ist und ausgebildet ist, um zumindest einen Anteil einer Zugkraft zum Anheben einer Last mittels des Seils bereitzustellen, und wobei die Treibeinheit ausgebildet ist, um ein freies Seilende des Seils von der Seiltrommel aufzunehmen und das Seil zu führen, und wobei am freien Seilende eine Seilkugel befestigt ist und ein Seildurchmesser der Seilkugel mehr als zweimal so groß wie der Durchmesser des Seils ist.

Unter der Seilwinde kann ein Hebezeug zum Heben und Bewegen von Lasten verstanden werden. Die Seilwinde kann beispielsweise an einem Transporthubschrauber zum Tragen von Lasten oder als Rettungswinde an einem Rettungshelikopter zur Rettung von in Not geratenen Personen eingesetzt werden. Unter der Aufnahmeeinheit kann ein Abschnitt eines Gehäuses der Seilwinde verstanden werden, in den die Seiltrommel eingesetzt werden kann. Beispielsweise kann die Aufnahmeeinheit zwei Aufnahmebereiche zum Aufnehmen zweier Endbereiche der Achse der Seiltrommel aufweisen. Die Seiltrommel kann zum Tragen und Lagern des Seils dienen. Die Seiltrommel kann drehbar an der Aufnahmeeinheit gelagert sein. So kann das Seil durch Drehen der Seiltrommel in einer Aufwickelrichtung zum Einholen einer an dem Seil befestigten Last auf die Seiltrommel aufgewickelt werden und durch Drehen der Seiltrommel in einer zu der Aufwickelrichtung entgegengesetzten Abwickelrichtung zum Ablassen des Seils zur Erde von der Seiltrommel abgewickelt werden. Die Schnellmontagevorrichtung kann ein- oder mehrteilig sein und ausgebildet sein, um von einem Bediener der Seilwinde schnell und ohne Werkzeug gehandhabt zu werden, um die Seiltrommel an der Seilwinde zu wechseln. Die Schnellmontagevorrichtung kann ausgebildet sein, um einen Form- und/oder Kraftschluss zwischen Seiltrommel und Windengehäuse herzustellen. Mit der Treibeinheit kann eine Funktionalität der Seilwinde im Sinne einer Treibscheibenwinde (Spillwinde) realisiert werden. So kann für eine gleichmäßige Zugkraft der Seilwinde gesorgt werden. Die Möglichkeit zum Aufnehmen des freien Seilendes des Seils erlaubt die Verwendung einer Seiltrommel, die bereits mit einem Seil bestückt ist. Das Seilende ist mit einer Kugel zum Bestücken des Seils mit einem Haken ausgestattet. Die Treibeinheit mit der zumindest einen Treibscheibe kann derart ausgebildet sein, dass das Seil zumindest eine Windung (Turn), bevorzugt mehrere Windungen auf der Treibscheibe vollzieht. Somit unterscheidet sich diese Treibscheibe von einer Umlenkrolle, bei der das Seil keine vollständige Windung vollzieht.

Die Treibscheibe kann eine Seilführungsfläche zum Führen der Mehrzahl von Windungen des Seils aufweisen. So kann die Zugkraft der Seilwinde besonders ausgewogen gestaltet werden.

Die Treibeinheit kann ausgebildet sein, um elektrisch und/oder hydraulisch betrieben zu werden.

Gemäß einer Ausführungsform kann die Treibeinheit zumindest ein Führungsblech zum Führen des Seils auf einer Seilführungsfläche der Treibscheibe aufweisen. Mit dem Führungsblech kann ein ungeordnetes Aufwickeln des Seils auf die Treibscheibe und damit eine Quetschung des Seils verhindert werden.

Gemäß einer besonderen Ausführungsform kann das Führungsblech um eine Schwenkachse zwischen einer ersten Position und einer zweiten Position schwenkbar mittels eines Scharniers an einem Gehäuse der Treibeinheit angeordnet oder anordenbar sein. So kann das Seilende von der Seiltrommel aus ohne weiteres in die Treibeinheit eingelegt werden.

Insbesondere kann in der ersten Position des Führungsblechs eine Innenseite des Führungsblechs so weit von einer Seilführungsfläche der Treibscheibe beabstandet sein, dass bei einem Führen des Seils in der Treibeinheit nicht mehr als eine Lage des Seils auf der Seilführungsfläche geführt wird. In der zweiten Position des Führungsblechs kann die Innenseite des Führungsblechs weiter als in der ersten Position von der Seilführungsfläche beabstandet sein. Mit dieser Ausführungsform kann insbesondere eine an dem Seilende angeordnete Seilkugel ohne weiteres durch die Treibeinheit geführt werden.

Gemäß einer Ausführungsform kann das Scharnier einem Seilabgangsbereich des Seils von der Treibeinheit zu einem die Aufnahmeeinheit aufweisenden Restbereich der Seilwinde gegenüberliegend angeordnet sein. So kann die Führung des Seils mittels des Führungsblechs optimal gewährleistet werden.

Gemäß einer weiteren Ausführungsform kann die Treibeinheit eine gegen die Treibscheibe verspannte oder verspannbare weitere Treibscheibe aufweisen. Insbesondere kann die Treibeinheit ein weiteres Führungsblech zum Führen des Seils auf einer Seilführungsfläche der weiteren Treibscheibe aufweisen. Die weitere Treibscheibe kann den Ausgleich der Zugkraft mittels der Treibeinheit vorteilhaft unterstützen. Mit dem weiteren Führungsblech kann die optimale Führung des Seils durch die Treibeinheit noch besser gewährleistet werden.

Das weitere Führungsblech kann um eine Schwenkachse zwischen einer ersten Position und einer zweiten Position schwenkbar mittels eines weiteren Scharniers an dem Gehäuse der Treibeinheit angeordnet oder anordenbar sein.

Auch kann die Treibeinheit eine Führungsrolle aufweisen. Die Führungsrolle kann in der Aufwickelrichtung des Seils auf die Seiltrommel der Treibscheibe vorgelagert sein und ausgebildet sein, um das Seil in einem Seilabgangsbereich des Seils von der Treibeinheit zu einem die Aufnahmeeinheit aufweisenden Restbereich der Seilwinde zu führen. Die Führungsrolle kann die Seilführung in der Treibeinheit ohne weiteres verbessern.

Auch die Führungsrolle kann um eine Schwenkachse zwischen einer ersten Position und einer zweiten Position schwenkbar an dem Gehäuse der Treibeinheit angeordnet oder anordenbar sein. Dabei kann die Führungsrolle in der ersten Position mit einem in der Treibeinheit geführten Seil in Kontakt sein und in der zweiten Position von einem in der Treibeinheit geführten Seil beabstandet sein. Auch mit dieser Ausführungsform kann gewährleistet werden, dass eine an dem Seilende angeordnete Seilkugel ohne weiteres durch die Treibeinheit geführt werden kann.

Gemäß einer Ausführungsform kann die Schnellmontagevorrichtung eine erste Schnellmontageeinrichtung zum Fixieren eines ersten Endabschnitts der Achse der Seiltrommel an der Seilwinde und/oder eine zweite Schnellmontageeinrichtung zum Fixieren eines dem ersten Endabschnitt gegenüberliegenden zweiten Endabschnitts der Achse der Seiltrommel an der Seilwinde aufweisen. So kann die Seiltrommel ohne weiteres schnell und gut handhabbar an der Seilwinde befestigt werden.

Beispielsweise können die erste Schnellmontageeinrichtung und/oder die zweite Schnellmontageeinrichtung zweiteilig ausgebildet sein. Dabei kann ein erster Teil der ersten Schnellmontageeinrichtung an der Seilwinde fixiert sein und ein zweiter Teil der ersten Schnellmontageeinrichtung im unverbauten Zustand der Schnellmontageeinrichtung lose oder frei beweglich sein und ausgebildet sein, um mit dem ersten Teil der ersten Schnellmontageeinrichtung kraft- und/oder formschlüssig verbunden zu werden, um den ersten Endabschnitt der Achse lösbar an der Seilwinde zu fixieren. Entsprechend kann ein erster Teil der zweiten Schnellmontageeinrichtung an der Seilwinde fixiert sein und ein zweiter Teil der zweiten Schnellmontageeinrichtung im unverbauten Zustand der Schnellmontageeinrichtung lose oder frei beweglich sein und ausgebildet sein, um mit dem ersten Teil der zweiten Schnellmontageeinrichtung kraft- und/oder formschlüssig verbunden zu werden, um den zweiten Endabschnitt der Achse lösbar an der Seilwinde zu fixieren. So kann die Schnellmontageeinrichtung noch weitergehend optimal handhabbar gestaltet werden.

Auch kann ein Abschnitt des ersten Teils der ersten Schnellmontageeinrichtung und/oder ein Abschnitt des ersten Teils der zweiten Schnellmontageeinrichtung ausgebildet sein, um eine Teilumfangsfläche der Achse zu umgreifen. Entsprechend kann ein Abschnitt des zweiten Teils der ersten Schnellmontageeinrichtung und/oder ein Abschnitt des zweiten Teils der zweiten Schnellmontageeinrichtung ausgebildet sein, um eine der Teilumfangsfläche gegenüberliegende weitere Teilumfangsfläche der Achse zu umgreifen. Mit dieser Ausführungsform der Aufnahmeeinheit kann eine Rotationsfähigkeit der Seiltrommel optimal gewährleistet werden.

Insbesondere kann die Schnellmontagevorrichtung als eine Schnellspannvorrichtung ausgebildet sein. Dies kann einen besonders schnellen und einfachen Seiltrommelwechsel gewährleisten.

Eine Seiltrommel weist eine Schnellmontagevorrichtung zum manuellen lösbaren Befestigen der Seiltrommel an einer Seilwinde auf.

Auch durch diese Ausführungsvariante der Erfindung in Form einer Seiltrommel kann die der Erfindung zugrunde liegende Aufgabe schnell und effizient gelöst werden.

Die Erfindung wird nachstehend anhand der beigefügten Zeichnungen beispielhaft näher erläutert. Es zeigen:
Fig. 1 eine schematische Darstellung einer Seilwinde gemäß einem Ausführungsbeispiel der vorliegenden Erfindung;
Fig. 2 eine Darstellung einer montierten Seiltrommel im Betrieb einer Seilwinde gemäß einem Ausführungsbeispiel der vorliegenden Erfindung;
Fig. 3 eine Darstellung einer Treibeinheit einer Seilwinde im Betrieb der Seilwinde gemäß einem Ausführungsbeispiel der vorliegenden Erfindung;
Fig. 4 eine Darstellung einer geöffneten Schnellmontagevorrichtung für einen Seilwechsel in einer Seilwinde gemäß einem Ausführungsbeispiel der vorliegenden Erfindung;
Fig. 5 eine Darstellung einer geöffneten Schnellmontagevorrichtung für einen Seilwechsel in einer Seilwinde gemäß einem weiteren Ausführungsbeispiel der vorliegenden Erfindung;
Fig. 6 eine Darstellung einer Treibeinheit einer Seilwinde beim Seilwechsel in der Seilwinde gemäß einem Ausführungsbeispiel der vorliegenden Erfindung;
Fig. 7 eine Darstellung einer montierten Seiltrommel im Betrieb einer Seilwinde gemäß einem weiteren Ausführungsbeispiel der vorliegenden Erfindung;
Fig. 8 eine Darstellung einer geöffneten Schnellmontagevorrichtung für einen Seilwechsel in einer Seilwinde gemäß einem weiteren Ausführungsbeispiel der vorliegenden Erfindung; und
Fig. 9 eine schematische Darstellung einer Seiltrommel mit einer Schnellmontagevorrichtung gemäß einem Ausführungsbeispiel der vorliegenden Erfindung.

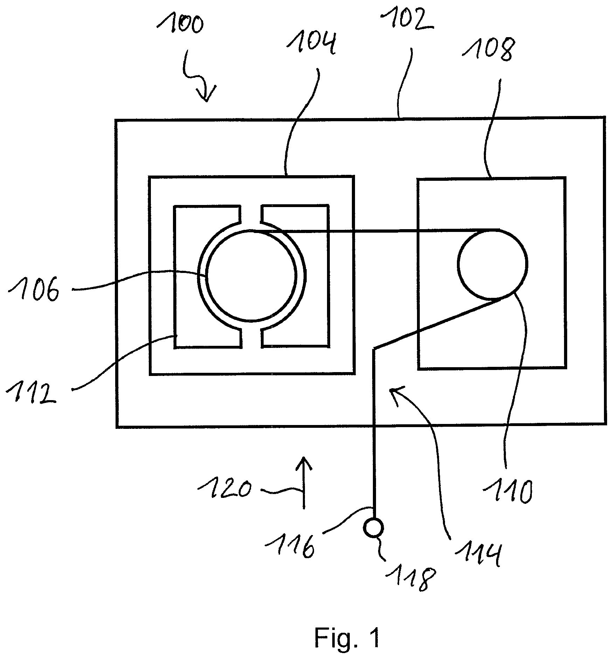

Fig. 1 zeigt eine schematische Darstellung einer Seilwinde 100 gemäß einem Ausführungsbeispiel der vorliegenden Erfindung. Die Seilwinde 100 umfasst ein Gehäuse 102 mit einer Aufnahmeeinheit 104 zum Aufnehmen einer Seiltrommel 106 und eine Treibeinheit 108 mit einer Treibscheibe 110.

Die Seilwinde 100 kann als Rettungswinde an einem Rettungshubschrauber eingesetzt werden. In diesem Fall wird die Seilwinde 100 über das Gehäuse 102 an dem Rettungshubschrauber befestigt. In der Darstellung in Fig. 1 ist die Seilwinde 100 mit der Seiltrommel 106 bestückt dargestellt. Die Aufnahmeeinheit 104 ist mit einer Schnellmontagevorrichtung 112 zum lösbaren Befestigen der Seiltrommel 106 an der Seilwinde 100 ausgestattet. Die Schnellmontagevorrichtung 112 kann von einem Bediener der Seilwinde 100 ohne Werkzeug gehandhabt werden, um einen schnellen Seilwechsel an der Seilwinde 100 ausführen zu können.

In der Darstellung in Fig. 1 ist ein Seil 114 der Seiltrommel 106 komplett durch die Seilwinde 100 hindurch geführt dargestellt. Ein freies Ende 116 des Seils 114 ist von der Seiltrommel 106 zu der Treibeinheit 108 geführt, dort in einer oder mehreren Windungen einlagig um die Treibscheibe 110 gelegt und anschließend mittels einer oder mehrerer Umlenkrollen nach unten aus dem Gehäuse 102 der Seilwinde 100 herausgeführt. Am Ende des Seils 114 ist eine Seilkugel 118 angeordnet. An der Seilkugel 118 kann beispielsweise ein Haken zum Anbringen einer Last an das Seil 114 befestigt werden.

Die Ausstattung der in Fig. 1 gezeigten Seilwinde 100 mit der Treibeinheit 108 kennzeichnet die Seilwinde 100 als eine Treibscheibenwinde 100. Die Treibscheibe 110 der Treibeinheit 108 wird elektrisch oder hydraulisch angetrieben und befördert mittels Reibungskraft das auf ihr aufliegende Seil 114. Zum Heben einer an dem Seil 114 befestigten Last befördert die Treibeinheit 108 das Seil 114 in einer mittels eines Pfeils in der Darstellung gekennzeichneten Aufwickelrichtung 120 in Richtung der Seiltrommel 106, die das Seil 114 auf eine Trommelachse aufwickelt. Entsprechend ist die Treibeinheit 108 in der Aufwickelrichtung 120 des Seils 114 der Aufnahmeeinheit 104 vorgelagert in der Seilwinde 100 angeordnet.

Das hierin vorgestellte Konzept für eine Seilwinde kann gemäß Ausführungsbeispielen auch an einer einfachen Seilwinde, die nicht mit einer Treibeinheit ausgestattet ist, realisiert werden.

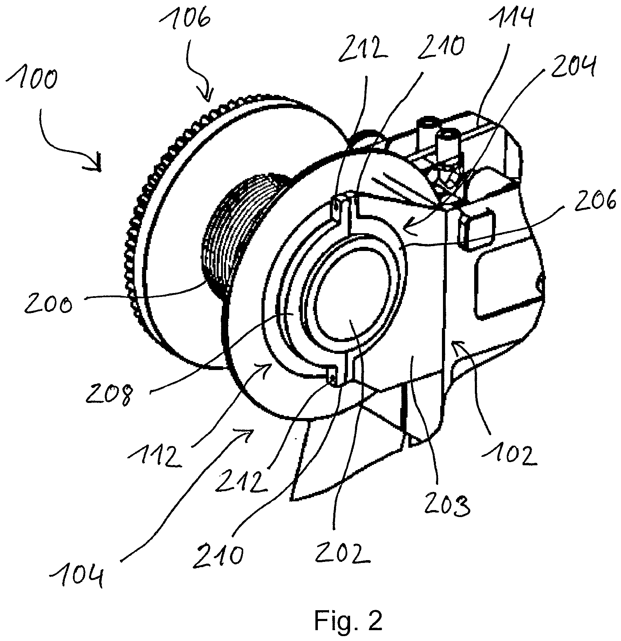

Fig. 2 zeigt perspektivisch einen Abschnitt einer Variante der hierin vorgestellten Seilwinde 100, der die Aufnahmeeinheit 104 aufweist. Fig. 2 zeigt einen Zustand der Seilwinde 100 im Betrieb. Die Seiltrommel 106 ist mittels der Schnellmontagevorrichtung 112 an der Aufnahmeeinheit 104 arretiert.

Die Seiltrommel 106 dient zum Tragen und Lagern des Seils 114. Dazu ist das Seil 114 in einer Mehrzahl von Windungen und gegebenenfalls Lagen auf einer Achse 200 der Seiltrommel 106 aufgewickelt. Die Achse 200 weist einen kreisrunden Querschnitt auf. Zwei kreisrunde Bordscheiben der Seiltrommel 106 halten den aufgewickelten Teil des Seils 114 zwischen sich in Position. Von dem Wickelbereich auf der Achse 200 wird das Seil 114 durch zwei Führungsrollen hindurch zu der in Fig. 2 nicht gezeigten Treibeinheit der Seilwinde 100 geführt.

Die Seiltrommel 106 ist mittels zweier einander gegenüberliegender und die Bordscheiben durchstoßender Endabschnitte 202 der Achse 200 mit der Aufnahmeeinheit 104 der Seilwinde 100 verbunden. Entsprechend bilden zwei Wände 203 des Gehäuses 102 der Seilwinde 100 je einen Aufnahmebereich zum lagernden Aufnehmen je eines der Achsendabschnitte 202. Dazu bilden die Wände je eine halbkreisförmige Ausnehmung zum rotierfähigen Lagern der Achse 200 aus. Der Wickelbereich der Seiltrommel 106 ist damit rotierfähig zwischen den Wänden 203 der Aufnahmeeinheit 104 positioniert.

Zum Arretieren der Seiltrommel 106 weist die Schnellmontagevorrichtung 112 zwei Schnellmontageeinrichtungen 204 auf, von denen je eine in je einer der halbkreisförmigen Ausnehmungen der Gehäusewände 203 der Aufnahmeeinheit 104 integriert ist. Jede der Schnellmontageeinrichtungen 204 ist ausgebildet, um je einen Endbereich 202 der Achse 200 rotierfähig am Gehäuse 102 der Seilwinde 100 zu befestigen.

Bei dem in Fig. 2 gezeigten Ausführungsbeispiel der Seilwinde 100 sind die Schnellmontageeinrichtungen 204 als zweiteilige Schnellspanner 204 ausgeführt. Dabei ist je ein erster Teil 206 jedes Schnellspanners 204 fest in die halbkreisförmigen Ausnehmungen der Aufnahmeeinheit 104 eingepasst und fest mit diesen verbunden. Je ein zweiter Teil 208 jedes Schnellspanners 204 ist im unverbauten Zustand der Schnellspanner 204 lose und ausgebildet, um zur lösbaren Fixierung der Achsendabschnitte 202 kraft- und/oder formschlüssig mit dem jeweiligen ersten Teil 206 verbunden zu werden.

Entsprechend der kreiszylinderischen Form der Achse 200 sind Hauptabschnitte der jeweiligen ersten Teile 206 und zweiten Teile 208 der Schnellspanner 204 als halbreisförmige Spannklammern 206, 208 ausgeführt, die ausgebildet sind, um gemeinsam die Achse 200 vollumfänglich zu umgreifen. An ihren beiden Enden bilden die ersten Spannklammern 206 und zweiten Spannklammern 208 der Schnellspanner 204 sich von dem halbkreisförmigen Verlauf weg erstreckende Verbindungsbereiche 210 mit einer Durchgangsöffnung auf.

Die Schnellspanner 204 werden geschlossen, indem die jeweiligen ersten Spannklammern 206 mit den jeweiligen zweiten Spannklammern 208 an den Verbindungsbereichen 210 unter Spannung aneinander angelegt und mittels insgesamt vier Befestigungselementen 212, hier Schrauben 212, insbesondere Flügelschrauben, die durch die Durchgangsöffnungen geführt werden, gegeneinander fixiert werden.

Anders als in Fig. 2 dargestellt, können Abschnitte der ersten Teile 206 und zweiten Teile 208 der Schnellspanner 204 ausgebildet sein, um jeweils weniger als eine halbe Umfangsfläche der Achse 200 zu umgreifen, um die Seiltrommel 106 zu arretieren. Anstelle der Schrauben 212 können gemäß Ausführungsbeispielen auch andere Verbindungselemente zum lösbaren Verbinden der ersten Teile 206 mit den zweiten Teilen 208 der Schnellspanner 204 verwendet werden.

Die in Fig. 2 gezeigte Ausführung der Schnellmontagevorrichtung 112 mit Schnellspannern 204 und Flügelschrauben 212 macht einen besonders schnellen und umkomplizierten Wechsel der Seiltrommel 106 möglich, da zum Öffnen und Schließen der Schnellspanner 204 kein Werkzeug erforderlich ist.

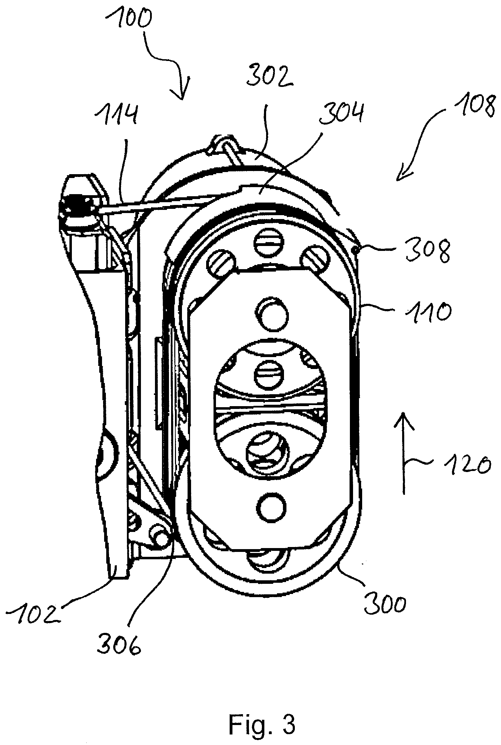

Fig. 3 zeigt perspektivisch einen Abschnitt der bevorzugten Variante der hierin vorgestellten Seilwinde 100, der die Treibeinheit 108 aufweist. Auch Fig. 3 zeigt die Seilwinde 100 im Betrieb.

Bei dem in Fig. 3 gezeigten Ausführungsbeispiel der Seilwinde 100 weist die Treibeinheit 108 neben der Treibscheibe 110 eine weitere Treibscheibe 300 auf. Die Treibscheiben 110, 300 sind fluchtend untereinander in einem Gehäuse 302 der Treibeinheit 108 angeordnet, sodass jeweilige Achsen der Treibscheiben 110, 300 vertikal genau übereinander liegen.

Das zwischen der Seiltrommel und der Treibeinheit 108 geführte Seil 114 ist in mehreren Windungen einlagig um Seilführungsflächen der ersten Treibscheibe 110 und der zweiten Treibscheibe 300 gelegt und wird im Betrieb der Seilwinde 100 von den Treibscheiben 110, 300 in der Aufwickelrichtung 120 des Seils 114 zu der Seiltrommel geführt, um auf dieser aufgewickelt zu werden. Die Treibscheiben 110, 300 sind gegeneinander verspannt und ausgebildet, um durch Reibung eine Zugkraft in der Aufwickelrichtung 120 des Seils 114 auf das Seil 114 auszuüben.

Die Treibeinheit 108 ist mit einem Führungsblech 304, einem weiteren Führungsblech und einer Führungsrolle 306 ausgestattet. Das weitere Führungsblech ist in der in Fig. 3 dargestellten perspektivischen Betrachtung der Treibeinheit 108 nicht zu sehen. Die Führungsbleche 304 und die Führungsrolle 306 sind ausgebildet, um das Seil 114 im Betrieb der Seilwinde 100 einlagig auf den Seilführungsflächen der Treibscheiben 110, 300 zu führen.

In dem in Fig. 3 gezeigten Betriebszustand der Seilwinde 100 sind die Führungen bzw. Führungsbleche 304 und die Führungsrolle 306 angelegt.

Das Führungsblech 304 ist mittels eines Scharniers 308 an dem Gehäuse 302 der Treibeinheit 108 angeordnet. Mittels des Scharniers 308 kann das Führungsblech 304 um eine Schwenkachse zwischen einer ersten Position und einer zweiten Position geschwenkt werden.

In Fig. 3 ist das Führungsblech 304 in der ersten Position gezeigt. Hier ist eine Innenseite, also eine der Seilführungsfläche der ersten Treibscheibe 110 zugewandte Seite des Führungsblechs 304, so weit von der Seilführungsfläche beabstandet, dass beim Führen des Seils 114 im Betrieb der Seilwinde 100 nicht mehr als eine Lage des Seils 114 auf der Seilführungsfläche geführt wird. Beispielsweise beträgt in der in Fig. 3 gezeigten ersten Position des Führungsblechs 304 ein Abstand zwischen der Seilführungsfläche der Treibscheibe 110 und der Innenseite des Führungsblechs 304 etwas mehr als eine Seildicke des Seils 114.

Das Scharnier 308 ist einem - in der Darstellung in Fig. 3 oberen - Seilabgangsbereich des Seils 114 von der Treibeinheit 108 zu dem die Aufnahmeeinheit aufweisenden Restbereich der Seilwinde 100 gegenüberliegend angeordnet.

Das weitere Führungsblech ist mittels eines weiteren Scharniers an dem Gehäuse 302 der Treibeinheit 108 angeordnet und um eine weitere Schwenkachse ebenfalls zwischen einer ersten und einer zweiten Position schwenkbar. Auch das weitere Führungsblech befindet sich in Fig. 3 in der ersten Position, in der eine Innenseite des Führungsblechs so weit von der Seilführungsfläche der weiteren Treibscheibe 300 beabstandet ist, dass beim Führen des Seils 114 im Betrieb der Seilwinde 100 das Seil 114 einlagig auf der Seilführungsfläche der weiteren Treibscheibe 300 geführt wird.

Das weitere Scharnier ist einem weiteren - in der Darstellung in Fig. 3 unteren - Seilabgangsbereich des Seils 114 von der Treibeinheit 108 zu dem die Aufnahmeeinheit aufweisenden Restbereich der Seilwinde 100 gegenüberliegend angeordnet.

Die Führungsrolle 306 ist in der Aufwickelrichtung 120 des Seils 114 auf die Seiltrommel den Treibscheiben 110, 300 vorgelagert und ausgebildet, um das Seil 114 in dem weiteren Seilabgangsbereich an die Seilführungsfläche der weiteren Treibscheibe 300 zu leiten.

Bei dem in Fig. 3 gezeigten Ausführungsbeispiel ist die Führungsrolle 306 mittels eines (in Fig. 3 nicht sichtbaren) Gelenks am Gehäuse 102 der Seilwinde 100 angeordnet und ebenfalls um eine Schwenkachse zwischen einer ersten und einer zweiten Position schwenkbar. In Fig. 3 ist die Führungsrolle 306 in der ersten Position gezeigt, in der sie mit dem in der Treibeinheit 108 geführten Seil 114 in Kontakt ist und das Seil 114 auf die Seilführungsfläche der weiteren Treibscheibe 300 drückt.

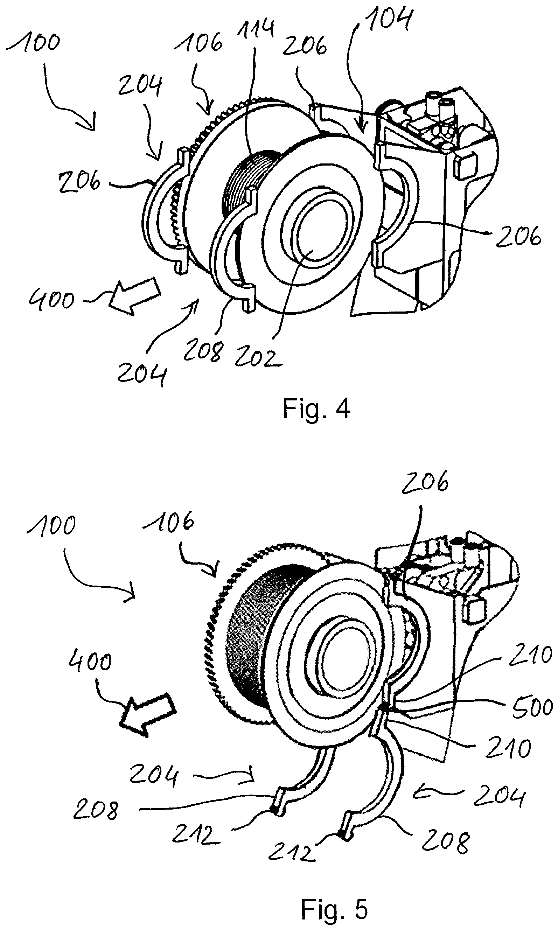

Fig. 4 zeigt in einer perspektivischen Darstellung einen beispielhaften Seilwechsel bei der in Fig. 2 vorgestellten bevorzugten Variante der hierin vorgestellten Seilwinde 100. Bei dem hierin vorgestellten Konzept des einfachen Seilwechsels an einer Rettungswinde für Hubschrauber wird beim Seilwechsel die gesamte Seiltrommel 106 inklusive Seil 114 ausgetauscht. Dies spart Zeit und Ressourcen.

In Fig. 4 sind die die beiden Achsenden 202 der Seiltrommel 106 fixierenden Schnellspanner 204 geöffnet. Zur Öffnung der Schnellspanner 204 wurden die die jeweiligen ersten Spannklammern 206 mit den jeweiligen zweiten Spannklammern 208 verbindenden Schrauben gelöst und entfernt. Die Seiltrommel 106 ist damit nicht mehr fixiert, und ein Bediener der Seilwinde 100 kann eine mittels eines Pfeils in der Darstellung gekennzeichnete Entnahme 400 der Seiltrommel 106 inklusive des auf die Seiltrommel 106 aufgewickelten Seils 114 inklusive der am Ende des Seils angeordneten Seilkugel 118 und eines etwaigen Hakens vornehmen. Anschließend kann der Bediener eine neue Seiltrommel mit einem Seil 114 und einer Seilkugel 118 und mit einem an der Seilkugel befestigten Haken in die Aufnahmeeinheit 104 einsetzen und durch Schließen der Schnellspanner 204 an der Seilwinde 100 befestigen.

Fig. 5 zeigt den beispielhaften Seilwechsel bei der in Fig. 2 vorgestellten bevorzugten Variante der Seilwinde 100 mit einer Variation im Aufbau der Schnellspanner 204. Hier sind die jeweiligen ersten Spannklammern 206 und zweiten Spannklammern 208 am jeweiligen - im geschlossenen Zustand der Schnellspanner 204 - unteren Ende der Schnellspanner 204 an den Verbindungsbereichen 210 anstelle mittels einer Schraube mittels je eines Verbindungsglieds 500 dauerhaft verbunden.

Die Verbindungsglieder 500 sind so ausgebildet, dass sie nach dem Lösen der die jeweiligen ersten Spannklammern 206 mit den jeweiligen zweiten Spannklammern 208 am oberen Ende der Schnellspanner 204 verbindenden Schrauben 212 ein Herunterklappen der zweiten Spannklammern 208 bzw. eine freie Bewegung der zweiten Spannklammern 208 gegenüber den ersten Spannklammern 206 zulassen. Auch so wird die Seiltrommel 106 zur Entnahme 400 zugänglich gemacht.

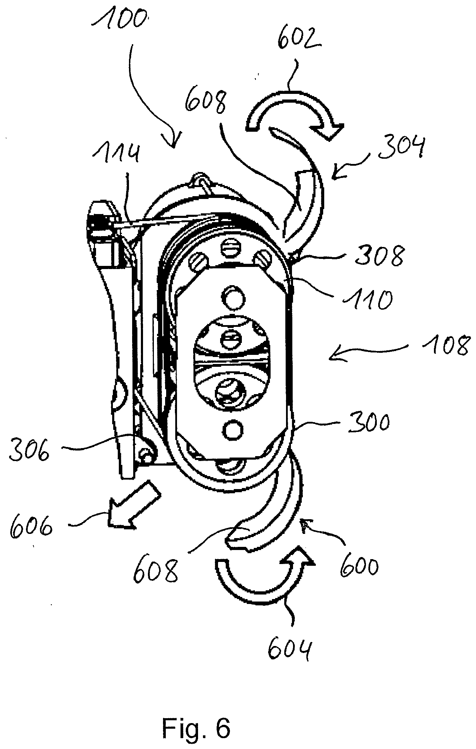

Fig. 6 zeigt eine Darstellung der beispielhaften Treibeinheit 108 der Seilwinde 100 aus Fig. 3 beim Seilwechsel. Hier sind das Führungsblech 304, das weitere Führungsblech 600 und die Führungsrolle 306 in ihrer jeweiligen zweiten Position gezeigt. In ihren zweiten Positionen sind die Führungsbleche 304, 600 und die Führungsrolle 306 von den Treibscheiben 110, 300 weggeklappt bzw. weggeschwenkt.

Konkret wurde das Führungsblech 304 in einer mittels eines Pfeils in der Darstellung gekennzeichneten Schwenkrichtung 602 mittels des Scharniers 308 von der Führungsfläche der Treibscheibe 110 weggeschwenkt. Das weitere Führungsblech 600 wurde in einer mittels eines weiteren Pfeils in der Darstellung gekennzeichneten weiteren Schwenkrichtung 604 mittels des weiteren Scharniers von der Führungsfläche der weiteren Treibscheibe 300 weggeschwenkt. Die Führungsrolle 306 wurde in einer mittels eines weiteren Pfeils in der Darstellung gekennzeichneten Kipp- bzw. Schwenkrichtung 606 von der Führungsfläche der weiteren Treibscheibe 300 weiter entfernt.

Die Darstellung in Fig. 6 zeigt deutlich, dass in der zweiten Position der Führungsbleche 304, 600 Abstände von Innenseiten 608 der Führungsbleche 304, 600 sowie einer Rollfläche der Führungsrolle 306 von den Seilführungsflächen der zugeordneten Treibscheiben 110, 300 um ein Mehrfaches größer sind als in der ersten Position. Damit kann ein Seilende des Seils 114 einer neu in die Aufnahmeeinheit der Seilwinde 100 eingesetzten Ersatzseiltrommel bequem und ohne Hilfsmittel in die Treibeinheit 108 eingeführt und in mehreren Windungen um die Treibscheiben 110, 300 gelegt werden.

Die große Öffnung in der Treibeinheit 108, die durch das Wegklappen der Führungsbleche 304, 600 und der Führungsrolle 306 geschaffen wurde, erlaubt insbesondere das Durchziehen der am Seilende befestigten Seilkugel durch die Treibeinheit 108. Der Durchmesser dieser Kugel ist in der Regel mehr als zweimal so groß wie der Durchmesser des Seils 114. Gemäß dem hier vorgestellten Konzept des vereinfachten Seiltauschs in der Seilwinde 100 ist der gesamte Weg des Seiles 114 durch die Seilwinde 100 so gestaltet, dass auch die Seilkugel, die die Verbindung zwischen Seil 114 und Haken herstellt, durch den Windenmechanismus der Treibeinheit 108 hindurchpasst.

Um das Durchziehen beim Aufwickeln sowie das Einziehen des neuen Seils 114 in die Windenmechanik der Seilwinde 100 zu ermöglichen, sind also alle Führungskomponenten 304, 306, 600 so gestaltet, dass das Seil 114 mit der daran befindlichen Kugel hindurchpasst oder Führungsbleche 304, 600 oder Rollen 306 abgeklappt werden können. Für den Trommeltausch und das Entnehmen und Einlegen des Seils 114 in die Windenmechanik sind keine Werkzeuge erforderlich. So werden Zeit und Kosten gespart.

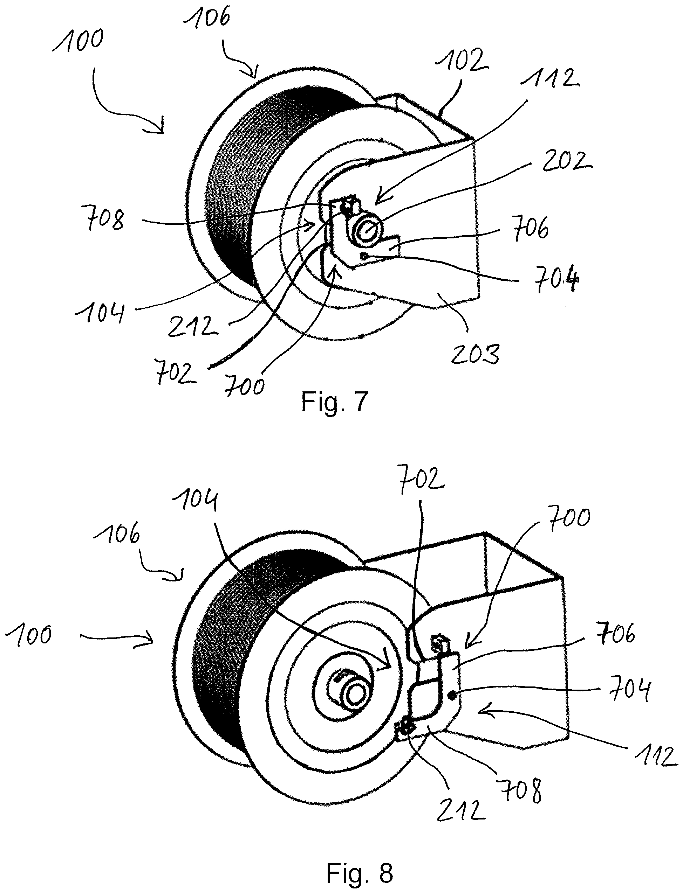

Fig. 7 zeigt perspektivisch einen Abschnitt der hierin vorgestellten Seilwinde 100 mit einer Variation der Gestaltung der Aufnahmeeinheit 104. Fig. 7 zeigt einen Zustand der Seilwinde 100 im Betrieb. Die Seiltrommel 106 ist mittels der Schnellmontagevorrichtung 112 an der Aufnahmeeinheit 104 arretiert.

Bei dem in Fig. 7 gezeigten Ausführungsbeispiel umfasst die Schnellmontagevorrichtung 112 anstelle von Schnellspannern Verschlussbleche 700 in Kombination mit Befestigungsschrauben als die Befestigungselemente 212. Es kommt je ein Verschlussblech 700 zum Fixieren je eines Achsendabschnitts 202 der Trommelachse zum Einsatz.

Die Gehäusewände 203 der Aufnahmeeinheit 104 dienen als Halter für die Seiltrommel 106 und sind ausgebildet, um die Trommelachse rotierfähig zu lagern. Den Aufnahmebereich für die Trommelachse bilden Führungsschlitze 702 in den Gehäusewänden 203, wobei eine lichte Weite der Führungsschlitze 702 in etwa einem Durchmesser der Trommelachse entspricht. Damit die Gehäusewände 203 die Seiltrommel 106 gut aufnehmen können, sind die Gehäusewände 203 so tief ausgeführt, dass die montierte Seiltrommel 106 frei rotieren kann, ohne durch weitere Teile des Gehäuses 102 der Seilwinde 100 blockiert zu werden.

Die Verschlussbleche 700 sind winkelförmig ausgebildet und um je eine Drehachse 704 zwischen einer Schließposition und einer Öffnungsposition drehbar an den Gehäusewänden 203 der Aufnahmeeinheit 104 angeordnet. Jede Drehachse 704 durchstößt einen ersten Schenkel 706 des jeweiligen winkelförmigen Verschlussblechs 700. Mit einer Drehung kann entsprechend ein zweiter Schenkel 708 des jeweiligen Verschlussblechs 700 zwischen der Schließposition und der Öffnungsposition bewegt werden.

In dem in Fig. 7 gezeigten Betriebszustand der Seilwinde 100 ist die Schnellmontagevorrichtung 112 geschlossen, indem sich die Verschlussbleche 700 in der Schließposition befinden. In der Schließposition bilden die Verschlussbleche 700 eine Fixierung der Trommelachse, indem sie in L-Form um die Achsendabschnitte 202 herum verlaufen. Die zweiten Schenkel 708 der Verschlussbleche 700 sind in der Schließposition vertikal angeordnet und verhindern damit ein Herausrutschen der Trommelachse aus den Führungsschlitzen 702. Die Seiltrommel 106 ist durch die Verschlussbleche 700 und die Verschraubung 212 arretiert.

Fig. 8 zeigt in einer perspektivischen Darstellung einen beispielhaften Seilwechsel bei der in Fig. 7 vorgestellten Variante der Seilwinde 100. Hier ist die Schnellmontagevorrichtung 112 in der Öffnungsposition gezeigt. Die Schrauben 212, insbesondere Flügelschrauben, wurden gelöst und die Verschlussbleche 700 nach unten weg geklappt, also soweit um die Drehachse 704 nach unten gedreht, dass die zweiten Schenkel 708 der Verschlussbleche 700 nun horizontal angeordnet sind und die Führungsschlitze 702 der Aufnahmeeinheit 104 freigeben.

Die Seiltrommel 106 ist durch Lösen der Verschraubung 212 und Abziehen der Trommel 106 abnehmbar. Gemäß einer Ausführungsform klappen die Verschlussbleche 700 automatisch nach unten und geben den Weg für die Trommelachse frei. Beim Einführen der neuen Trommel 106 in die Führungsschlitze 702 des Halters für die Seiltrommel 106 werden die Verschlussbleche 700 durch das Anliegen der Achse automatisch bis zum Anschlag gedreht bzw. geschoben. Anschließend wird die Verschraubung 212 wieder festgezogen und die neue Seiltrommel 106 gesichert. Durch die Verwendung von Flügelschrauben ist auch in dieser Ausführung kein weiteres Werkzeug erforderlich.

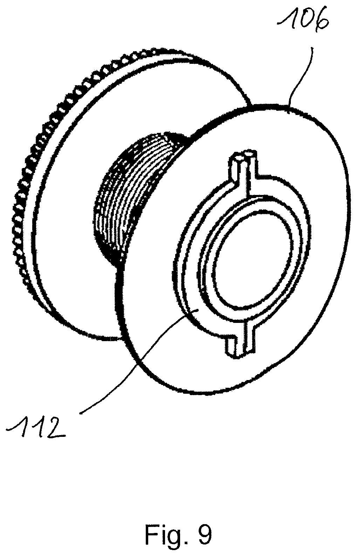

Fig. 9 zeigt eine schematische Darstellung einer Seiltrommel 106 mit einer Schnellmontagevorrichtung 112 gemäß einem Ausführungsbeispiel der vorliegenden Erfindung. Die Schnellmontagevorrichtung 112 ist ausgebildet, um ein manuelles lösbares Befestigen der Seiltrommel 106 an einer Seilwinde zu ermöglichen.

Die beschriebenen und in den Figuren gezeigten Ausführungsbeispiele sind nur beispielhaft gewählt. Unterschiedliche Ausführungsbeispiele können vollständig oder in Bezug auf einzelne Merkmale miteinander kombiniert werden. Auch kann ein Ausführungsbeispiel durch Merkmale eines weiteren Ausführungsbeispiels ergänzt werden.

Ferner können erfindungsgemäße Verfahrensschritte wiederholt sowie in einer anderen als in der beschriebenen Reihenfolge ausgeführt werden.

Umfasst ein Ausführungsbeispiel eine "und/oder"-Verknüpfung zwischen einem ersten Merkmal und einem zweiten Merkmal, so ist dies so zu lesen, dass das Ausführungsbeispiel gemäß einer Ausführungsform sowohl das erste Merkmal als auch das zweite Merkmal und gemäß einer weiteren Ausführungsform entweder nur das erste Merkmal oder nur das zweite Merkmal aufweist.

## Patentansprüche

1. Seilwinde (100) mit folgenden Merkmalen:
einer Aufnahmeeinheit (104) zum Aufnehmen einer Seiltrommel (106) mit einem auf einer Achse (200) der Seiltrommel (106) aufgewickelten Seil (114), wobei die Aufnahmeeinheit (104) eine Schnellmontagevorrichtung (112) zum manuellen lösbaren Befestigen der Seiltrommel (106) an der Seilwinde (100) aufweist; und
eine Treibeinheit (108) mit zumindest einer Treibscheibe (110), wobei die Treibeinheit (108) in einer Aufwickelrichtung (120) des Seils (114) auf die Seiltrommel (106) der Aufnahmeeinheit (104) vorgelagert ist und ausgebildet ist, um zumindest einen Anteil einer Zugkraft zum Anheben einer Last mittels des Seils (114) bereitzustellen, und wobei die Treibeinheit (108) ausgebildet ist, um ein freies Seilende (116) des Seils (114) von der Seiltrommel (106) aufzunehmen und das Seil (114) zu führen, und wobei am freien Seilende (116) eine Seilkugel (118) befestigt ist und ein Durchmesser der Seilkugel (118) mehr als zweimal so groß wie der Durchmesser des Seils (114) ist.

2. Seilwinde (100) gemäß Anspruch 1, **dadurch gekennzeichnet, dass** die Treibscheibe (110) eine Seilführungsfläche zum Führen einer Mehrzahl von Windungen des Seils (114) aufweist.

3. Seilwinde (100) gemäß Anspruch 1 oder 2, **dadurch gekennzeichnet, dass** die Treibeinheit (108) zumindest ein Führungsblech (304) zum Führen des Seils (114) auf einer Seilführungsfläche der Treibscheibe (110) aufweist.

4. Seilwinde (100) gemäß Anspruch 3, **dadurch gekennzeichnet, dass** das Führungsblech (304) um eine Schwenkachse zwischen einer ersten Position und einer zweiten Position schwenkbar mittels eines Scharniers (308) an einem Gehäuse (302) der Treibeinheit (108) angeordnet oder anordenbar ist.

5. Seilwinde (100) gemäß Anspruch 4, **dadurch gekennzeichnet, dass** in der ersten Position eine Innenseite (608) des Führungsblechs (304) so weit von einer Seilführungsfläche der Treibscheibe (110) beabstandet ist, dass bei einem Führen des Seils (114) in der Treibeinheit (108) nicht mehr als eine Lage des Seils (114) auf der Seilführungsfläche geführt wird und/oder in der zweiten Position die Innenseite (608) des Führungsblechs (304) weiter als in der ersten Position von der Seilführungsfläche beabstandet ist.

6. Seilwinde (100) gemäß Anspruch 4 oder 5, **dadurch gekennzeichnet, dass** das Scharnier (308) einem Seilabgangsbereich des Seils (114) von der Treibeinheit (108) zu einem die Aufnahmeeinheit (104) aufweisenden Restbereich der Seilwinde (100) gegenüberliegend angeordnet ist.

7. Seilwinde (100) gemäß einem der vorangegangenen Ansprüche, **dadurch gekennzeichnet, dass** die Treibeinheit (108) eine gegen die Treibscheibe (110) verspannte oder verspannbare weitere Treibscheibe (300), insbesondere ein weiteres Führungsblech (600) zum Führen des Seils (114) auf einer Seilführungsfläche der weiteren Treibscheibe (300) aufweist.

8. Seilwinde (100) gemäß einem der vorangegangenen Ansprüche, **dadurch gekennzeichnet, dass** die Treibeinheit (108) eine Führungsrolle (306) aufweist, die in der Aufwickelrichtung (120) des Seils (114) auf die Seiltrommel (106) der Treibscheibe (110) vorgelagert ist und ausgebildet ist, um das Seil (114) in einem Seilabgangsbereich des Seils (114) von der Treibeinheit (108) zu einem die Aufnahmeeinheit (104) aufweisenden Restbereich der Seilwinde (100) zu führen.

9. Seilwinde (100) gemäß Anspruch 8, **dadurch gekennzeichnet, dass** die Führungsrolle (306) um eine Schwenkachse zwischen einer ersten Position und einer zweiten Position schwenkbar an dem Gehäuse (302) der Treibeinheit (108) angeordnet oder anordenbar ist, wobei die Führungsrolle (306) in der ersten Position mit einem in der Treibeinheit (108) geführten Seil (114) in Kontakt ist und in der zweiten Position von einem in der Treibeinheit (108) geführten Seil (114) beabstandet ist.

10. Seilwinde (100) gemäß einem der vorangegangenen Ansprüche, **dadurch gekennzeichnet, dass** die Schnellmontagevorrichtung (112) eine erste Schnellmontageeinrichtung (204) zum Fixieren eines ersten Endabschnitts (202) der Achse (200) der Seiltrommel (106) an der Seilwinde (100) und/oder eine zweite Schnellmontageeinrichtung (204) zum Fixieren eines dem ersten Endabschnitt (202) gegenüberliegenden zweiten Endabschnitts (202) der Achse (200) der Seiltrommel (106) an der Seilwinde (100) aufweist.

11. Seilwinde (100) gemäß einem der vorangegangenen Ansprüche, **dadurch gekennzeichnet, dass** die erste Schnellmontageeinrichtung (204) und/oder die zweite Schnellmontageeinrichtung (204) zweiteilig ausgebildet sind, insbesondere wobei ein erster Teil (206) der ersten Schnellmontageeinrichtung (204) an der Seilwinde (100) fixiert ist und ein zweiter Teil (208) der ersten Schnellmontageeinrichtung (204) im unverbauten Zustand der Schnellmontageeinrichtung (204) lose oder frei beweglich ist und ausgebildet ist, um mit dem ersten Teil (206) der ersten Schnellmontageeinrichtung (204) kraft-und/oder formschlüssig verbunden zu werden, um den ersten Endabschnitt (202) der Achse (200) lösbar an der Seilwinde (100) zu fixieren, und/oder ein erster Teil (206) der zweiten Schnellmontageeinrichtung (204) an der Seilwinde (100) fixiert ist und ein zweiter Teil (208) der zweiten Schnellmontageeinrichtung (204) im unverbauten Zustand der Schnellmontageeinrichtung (204) lose oder frei beweglich ist und ausgebildet ist, um mit dem ersten Teil (206) der zweiten Schnellmontageeinrichtung (204) kraft- und/oder formschlüssig verbunden zu werden, um den zweiten Endabschnitt (202) der Achse (200) lösbar an der Seilwinde (100) zu fixieren.

12. Seilwinde (100) gemäß Anspruch 11, **dadurch gekennzeichnet, dass** ein Abschnitt des ersten Teils (206) der ersten Schnellmontageeinrichtung (204) und/oder ein Abschnitt des ersten Teils (206) der zweiten Schnellmontageeinrichtung (204) ausgebildet ist, um eine Teilumfangsfläche der Achse (200) zu umgreifen, und ein Abschnitt des zweiten Teils (208) der ersten Schnellmontageeinrichtung (204) und/oder ein Abschnitt des zweiten Teils (208) der zweiten Schnellmontageeinrichtung (204) ausgebildet ist, um eine der Teilumfangsfläche gegenüberliegende weitere Teilumfangsfläche der Achse (200) zu umgreifen.

13. Seilwinde (100) gemäß einem der vorangegangenen Ansprüche, **dadurch gekennzeichnet, dass** die Schnellmontagevorrichtung (112) als eine Schnellspannvorrichtung ausgebildet ist.

## Claims

1. Cable winch (100) having the following features:
a receiving unit (104) for accommodating a cable drum (106) that includes a cable (114) wound about an axle (200) of the cable drum (106), wherein the receiving unit (104) has a quick mounting mechanism (112) for attaching the cable drum (106) in a manually detachable manner to the cable winch (100); and
a drive unit (108) having at least one driving pulley (110), wherein the drive unit (108) is positioned ahead of the receiving unit (104) in a winding direction (120) of the cable (114) onto the cable drum (106) and is designed to provide at least a proportion of a pulling force for raising a load by means of the cable (114), and wherein the drive unit (108) is designed to receive a free cable end (116) of the cable (114) from the cable drum (106) and to guide the cable (114), and wherein a cable ball (118) is attached to the free cable end (116) and a diameter of the cable ball (118) is more than twice the diameter of the cable (114).

2. Cable winch (100) according to Claim 1, **characterized in that** the driving pulley (110) has a cable guide surface for guiding a plurality of turns of the cable (114) .

3. Cable winch (100) according to Claim 1 or 2, **characterized in that** the drive unit (108) has at least one guide plate (304) for guiding the cable (114) on a cable guide surface of the driving pulley (110).

4. Cable winch (100) according to Claim 3, **characterized in that** the guide plate (304) is arranged or can be arranged on a housing (302) of the drive unit (108) by means of a hinge (308) in such a way that it can be pivoted about a pivoting axis between a first position and a second position.

5. Cable winch (100) according to Claim 4, **characterized in that** an inner side (608) of the guide plate (304) is spaced apart from a cable guide surface of the driving pulley (110) to such an extent in the first position that no more than one layer of the cable (114) is guided on the cable guide surface during guidance of the cable (114) in the drive unit (108), and/or the inner side (608) of the guide plate (304) is spaced further apart from the cable guide surface in the second position than in the first position.

6. Cable winch (100) according to Claim 4 or 5, **characterized in that** the hinge (308) is arranged opposite a cable discharge region of the cable (114) from the drive unit (108) to a remaining region of the cable winch (100), said remaining region having the receiving unit (104).

7. Cable winch (100) according to one of the preceding claims, **characterized in that** the drive unit (108) has a further driving pulley (300), which is clamped or can be clamped against the driving pulley (110), in particular has a further guide plate (600) for guiding the cable (114) on a cable guide surface of the further driving pulley (300).

8. Cable winch (100) according to one of the preceding claims, **characterized in that** the drive unit (108) has a guide roller (306), which is positioned ahead of the driving pulley (110) in the winding direction (120) of the cable (114) onto the cable drum (106) and is designed to guide the cable (114) in a cable discharge region of the cable (114) from the drive unit (108) to a remaining region of the cable winch (100), said remaining region having the receiving unit (104).

9. Cable winch (100) according to Claim 8, **characterized in that** the guide roller (306) is arranged or can be arranged on the housing (302) of the drive unit (108) in such a way that it can be pivoted about a pivoting axis between a first position and a second position, wherein the guide roller (306) is in contact in the first position with a cable (114) guided in the drive unit (108), and is spaced apart in the second position from a cable (114) guided in the drive unit (108).

10. Cable winch (100) according to one of the preceding claims, **characterized in that** the quick mounting mechanism (112) has a first quick mounting device (204) for fixing a first end section (202) of the axle (200) of the cable drum (106) on the cable winch (100) and/or has a second quick mounting device (204) for fixing a second end section (202), situated opposite the first end section (202), of the axle (200) of the cable drum (106) on the cable winch (100).

11. Cable winch (100) according to one of the preceding claims, **characterized in that** the first quick mounting device (204) and/or the second quick mounting device (204) is of two-part design, in particular wherein a first part (206) of the first quick mounting device (204) is fixed on the cable winch (100) and a second part (208) of the first quick mounting device (204) is loose or freely movable in the uninstalled state of the quick mounting device (204) and is designed to be connected nonpositively and/or positively to the first part (206) of the first quick mounting device (204) in order to fix the first end section (202) of the axle (200) detachably on the cable winch (100), and/or a first part (206) of the second quick mounting device (204) is fixed on the cable winch (100) and a second part (208) of the second quick mounting device (204) is loose or freely movable in the uninstalled state of the quick mounting device (204) and is designed to be connected nonpositively and/or positively to the first part (206) of the second quick mounting device (204) in order to fix the second end section (202) of the axle (200) detachably on the cable winch (100).

12. Cable winch (100) according to Claim 11, **characterized in that** one section of the first part (206) of the first quick mounting device (204) and/or one section of the first part (206) of the second quick mounting device (204) is designed to fit around a partial circumferential surface of the axle (200), and one section of the second part (208) of the first quick mounting device (204) and/or one section of the second part (208) of the second quick mounting device (204) is designed to fit around a further partial circumferential surface of the axle (200), said further partial circumferential surface being situated opposite the partial circumferential surface.

13. Cable winch (100) according to one of the preceding claims, **characterized in that** the quick mounting mechanism (112) is designed as a quick clamping mechanism.

## Revendications

1. Treuil (100) comprenant les caractéristiques suivantes :
une unité de réception (104) pour recevoir un tambour de treuil (106) avec un câble (114) enroulé sur un axe (200) du tambour de treuil (106), l'unité de réception (104) présentant un dispositif de montage rapide (112) pour la fixation amovible manuelle du tambour de treuil (106) au treuil (100) ; et
une unité d'entraînement (108) avec au moins un disque d'entraînement (110), l'unité d'entraînement (108) étant prémontée dans une direction d'enroulement (120) du câble (114) sur le tambour de treuil (106) de l'unité de réception (104) et étant réalisée pour fournir au moins une proportion d'une force de traction pour soulever une charge au moyen du câble (114), et l'unité d'entraînement (108) étant réalisée pour recevoir une extrémité de câble libre (116) du câble (114) depuis le tambour de treuil (106) et pour guider le câble (114), et une boule de câble (118) étant fixée à l'extrémité de câble libre (116) et un diamètre de la boule de câble (118) étant plus de deux fois plus grand que le diamètre du câble (114) .

2. Treuil (100) selon la revendication 1, **caractérisé en ce que** le disque d'entraînement (110) présente une surface de guidage de câble pour guider une pluralité d'enroulements du câble (114).

3. Treuil (100) selon la revendication 1 ou 2, **caractérisé en ce que** l'unité d'entraînement (108) présente au moins une tôle de guidage (304) pour guider le câble (114) sur une surface de guidage de câble du disque d'entraînement (110).

4. Treuil (100) selon la revendication 3, **caractérisé en ce que** la tôle de guidage (304) est ou peut être disposée au niveau d'un boîtier (302) de l'unité d'entraînement (108) de manière à pouvoir pivoter autour d'un axe de pivotement entre une première position et une deuxième position au moyen d'une charnière (308).

5. Treuil (100) selon la revendication 4, **caractérisé en ce que**, dans la première position, un côté intérieur (608) de la tôle de guidage (304) est espacé d'une surface de guidage de câble du disque d'entraînement (110) dans une mesure telle que lors d'un guidage du câble (114) dans l'unité d'entraînement (108), pas plus qu'une couche du câble (114) soit guidée sur la surface de guidage de câble et/ou dans la deuxième position, le côté intérieur (608) de la tôle de guidage (304) est plus espacé de la surface de guidage de câble que dans la première position.

6. Treuil (100) selon la revendication 4 ou 5, **caractérisé en ce que** la charnière (308) est disposée à l'opposé d'une région de sortie de câble du câble (114) depuis l'unité d'entraînement (108) jusqu'à une région restante du treuil (100) présentant l'unité de réception (104).

7. Treuil (100) selon l'une quelconque des revendications précédentes, **caractérisé en ce que** l'unité d'entraînement (108) présente un disque d'entraînement supplémentaire (300) serré ou pouvant être serré contre le disque d'entraînement (110), en particulier une tôle de guidage supplémentaire (600) pour guider le câble (114) sur une surface de guidage de câble du disque d'entraînement supplémentaire (300).

8. Treuil (100) selon l'une quelconque des revendications précédentes, **caractérisé en ce que** l'unité d'entraînement (108) présente une poulie de guidage (306) qui est prémontée dans la direction d'enroulement (120) du câble (114) sur le tambour de treuil (106) du disque d'entraînement (110) et qui est réalisée pour guider le câble (114) dans une région de sortie de câble du câble (114) depuis l'unité d'entraînement (108) jusqu'à une région restante du treuil (100) présentant l'unité de réception (104).

9. Treuil (100) selon la revendication 8, **caractérisé en ce que** la poulie de guidage (306) est ou peut être disposée au niveau du boîtier (302) de l'unité d'entraînement (108) de manière à pouvoir pivoter autour d'un axe de pivotement entre une première position et une deuxième position, la poulie de guidage (306), dans la première position, étant en contact avec un câble (114) guidé dans l'unité d'entraînement (108), et dans la deuxième position, étant espacée d'un câble (114) guidé dans l'unité d'entraînement (108).

10. Treuil (100) selon l'une quelconque des revendications précédentes, **caractérisé en ce que** le dispositif de montage rapide (112) présente un premier système de montage rapide (204) pour la fixation au niveau du treuil (100) d'une première portion d'extrémité (202) de l'axe (200) du tambour de treuil (106) et/ou un deuxième système de montage rapide (204) pour la fixation au niveau du treuil (100) d'une deuxième portion d'extrémité (202) de l'axe (200) du tambour de treuil (106) opposée à la première portion d'extrémité (202).

11. Treuil (100) selon l'une quelconque des revendications précédentes, **caractérisé en ce que** le premier système de montage rapide (204) et/ou le deuxième système de montage rapide (204) sont réalisés en deux parties, notamment une première partie (206) du premier système de montage rapide (204) étant fixée au treuil (100) et une deuxième partie (208) du premier système de montage rapide (204), dans l'état non monté du système de montage rapide (204), étant lâche ou librement déplaçable et étant réalisée de manière à être connectée par force et/ou par engagement par correspondance de formes à la première partie (206) du premier système de montage rapide (204), afin de fixer la première portion d'extrémité (202) de l'axe (200) de manière amovible au treuil (100), et/ou une première partie (206) du deuxième système de montage rapide (204) étant fixée au treuil (100) et une deuxième partie (208) du deuxième système de montage rapide (204), dans l'état non monté du système de montage rapide (204), étant lâche ou étant librement déplaçable et étant réalisée de manière à être connectée par force et/ou par engagement par correspondance de formes à la première partie (206) du deuxième système de montage rapide (204) afin de fixer la deuxième portion d'extrémité (202) de l'axe (200) de manière amovible au treuil (100).

12. Treuil (100) selon la revendication 11, **caractérisé en ce qu'**une portion de la première partie (206) du premier système de montage rapide (204) et/ou une portion de la première partie (206) du deuxième système de montage rapide (204) sont réalisées pour venir en prise autour d'une surface périphérique partielle de l'axe (200) et une portion de la deuxième partie (208) du premier système de montage rapide (204) et/ou une portion de la deuxième partie (208) du deuxième système de montage rapide (204) sont réalisées pour venir en prise autour d'une surface périphérique partielle supplémentaire de l'axe (200) opposée à la surface périphérique partielle.

13. Treuil (100) selon l'une quelconque des revendications précédentes, **caractérisé en ce que** le dispositif de montage rapide (112) est réalisé sous forme de dispositif de serrage rapide.
